(19) Europäisches Patentamt
European Patent Office
Office européen des brevets

(11) **EP 4 723 623 A1**

(12) **EUROPEAN PATENT APPLICATION**

(43) Date of publication:
08.04.2026 Bulletin 2026/15

(21) Application number: 24306619.8

(22) Date of filing: 03.10.2024

(51) International Patent Classification (IPC):
*H04N 19/109* (2014.01)    *H04N 19/139* (2014.01)
*H04N 19/176* (2014.01)    *H04N 19/61* (2014.01)

(52) Cooperative Patent Classification (CPC):
H04N 19/109; H04N 19/139; H04N 19/147;
H04N 19/176; H04N 19/61

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **THIEBAUD, Sylvain
35530 NOYAL SUR VILAINE (FR)**
• **PURI, Saurabh
SAINT-LAZARE, J7T 0P6 (CA)**
• **POIRIER, Tangi
35235 THORIGNE-FOUILLARD (FR)**
• **LE GUYADEC, Pascal
35760 SAINT GREGOIRE (FR)**

(74) Representative: **Vossius & Partner
Patentanwälte Rechtsanwälte mbB
Siebertstraße 3
81675 München (DE)**

(54) **RATE-DISTORTION OPTIMIZATION WITH MOTION INFORMATION**

(57)    Systems and methods directed to a rate-distortion optimization process. One example is directed to a video encoding device including an electronic processor. The electronic processor is configured to obtain motion information associated with a video block and determine, as a function of the motion information, a subset of coding tools from a plurality of coding tools for rate-distortion performance evaluation of the video block.

800

810
OBTAIN MOTION INFORMATION ASSOCIATED WITH VIDEO BLOCK

820
DETERMINING, AS A FUNCTION OF THE MOTION INFORMATION, A SUBSET OF CODING TOOLS FROM A PLURALITY OF CODING TOOLS FOR RATE-DISTORTION PERFORMANCE EVALUATION OF THE VIDEO BLOCK

**FIG. 8**

**Description**

**BACKGROUND**

The present application is related to video encoding, in particular, rate-distortion optimization.

Video encoding and/or decoding may involve partitioning (e.g., splitting) coding blocks. These partitioning/splitting operations may improve coding gains but may also add complexity and costs to a coding device (e.g., such as an encoder). It is therefore desirable for the coding device to improve the speed of these operations while maintaining (or improving) the overall coding gains and avoiding significantly increasing coding complexity.

**BRIEF SUMMARY**

Briefly stated, in one embodiment, a video encoding device includes an electronic processor. The electronic processor is configured to obtain motion information associated with a video block and determine, as a function of the motion information, a subset of coding tools from a plurality of coding tools for rate-distortion performance evaluation of the video block.

In another embodiment, a video encoding method includes obtaining motion information associated with a video block and determining, as a function of the motion information, a subset of coding tools from a plurality of coding tools for a rate-distortion performance evaluation of the video block.

In yet another embodiment, a non-transitory computer readable medium storing instructions that, when executed by at least one electronic processor, perform a set of functions. The set of functions includes obtaining motion information associated with a video block and determining, as a function of the motion information, a subset of coding tools from a plurality of coding tools for a rate-distortion performance evaluation of the video block.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 is an example video frame and corresponding depth and motion information according to one or more embodiments of the present disclosure;

FIG. 5 illustrates an example architecture of a cloud gaming system according to one or more embodiments of the present disclosure;

FIG. 6 illustrates example splitting types for intra and/or inter coded blocks according to one or more embodiments of the present disclosure;

FIG. 7 illustrates a flowchart of an example method for video encoding according to one or more embodiments of the present disclosure;

FIG. 8 illustrates a flowchart of an example method for video encoding according to one or more embodiments of the present disclosure;

FIG. 9 illustrates example motion vector difference (MMVD) tables according to one or more embodiments of the present disclosure;

FIG. 10 illustrates an example pair of motion models each illustrating an example affine motion field of a video block according to one or more embodiments of the present disclosure;

FIG. 11 illustrates example splitting types of a geometric partitioning mode according to one or more embodiments of the present disclosure;

FIG. 12 illustrates an example of a decoder-side Motion Vector Refinement (DMVR) according to one or more embodiments of the present disclosure;

FIG. 13 illustrates different motion compensation predictions according to one or more embodiments of the present disclosure;

FIG. 14 illustrates a flowchart of an example method for video encoding according to one or more embodiments of the present disclosure;

FIG. 15 illustrates different cases in DMVR according to one or more embodiments of the present disclosure; and

FIG. 16 illustrates a flowchart of an example method for video encoding according to one or more embodiments of the present disclosure.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

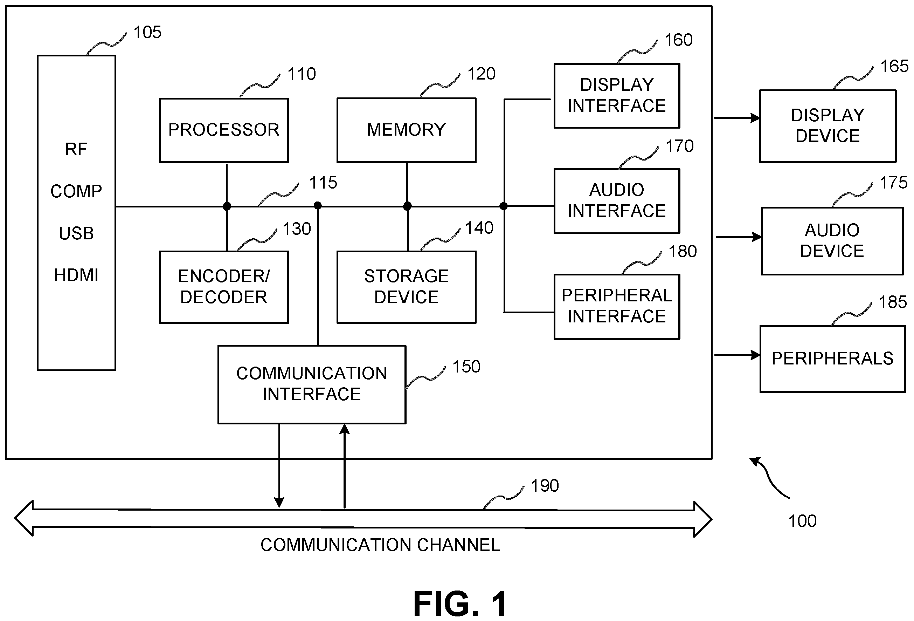

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

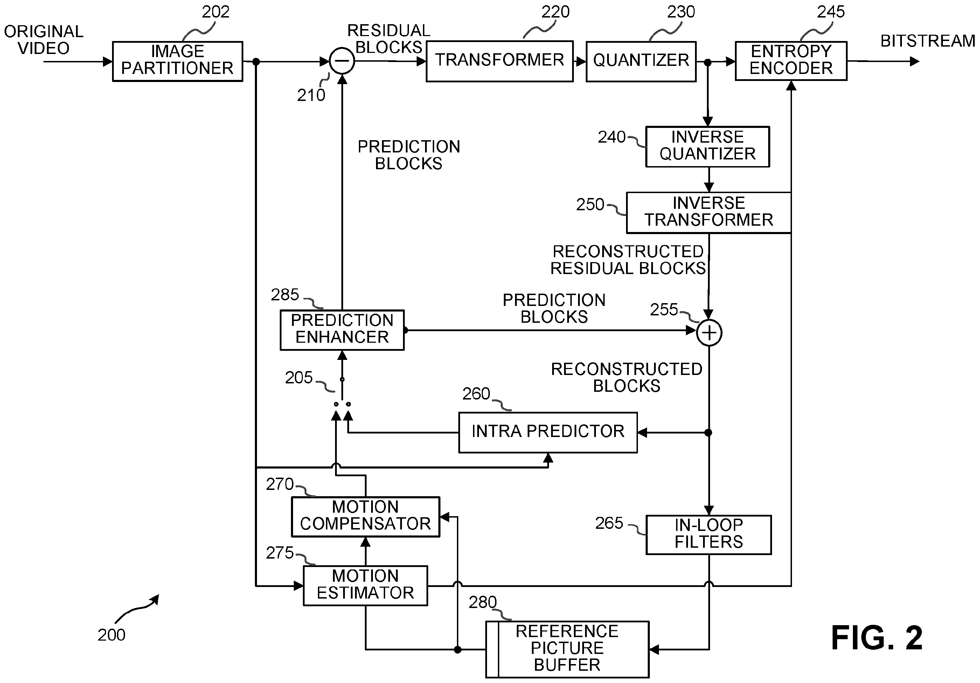

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

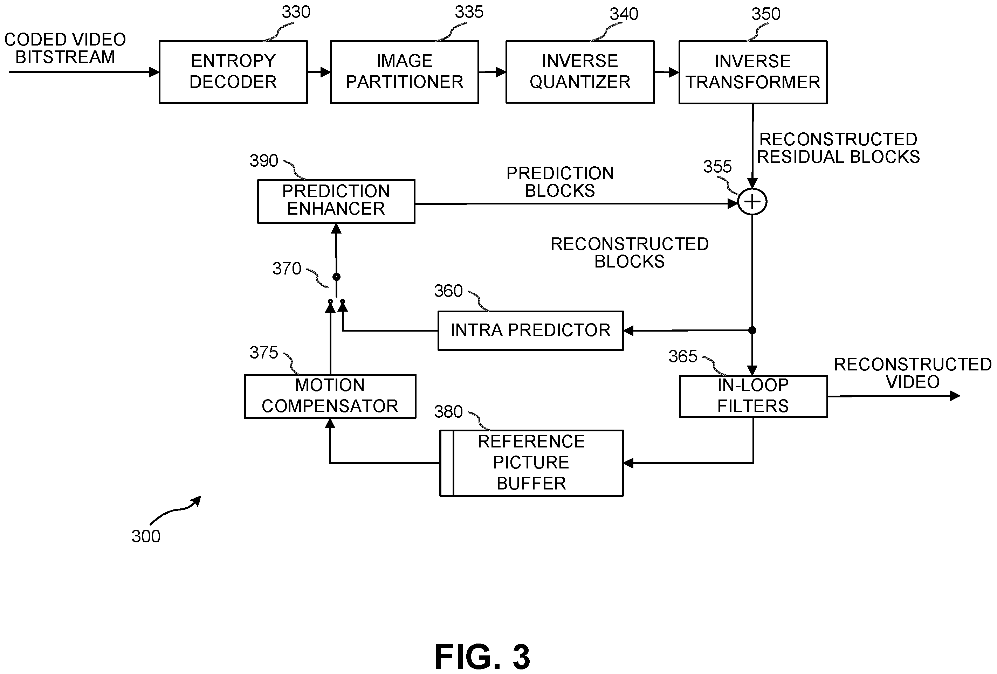

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

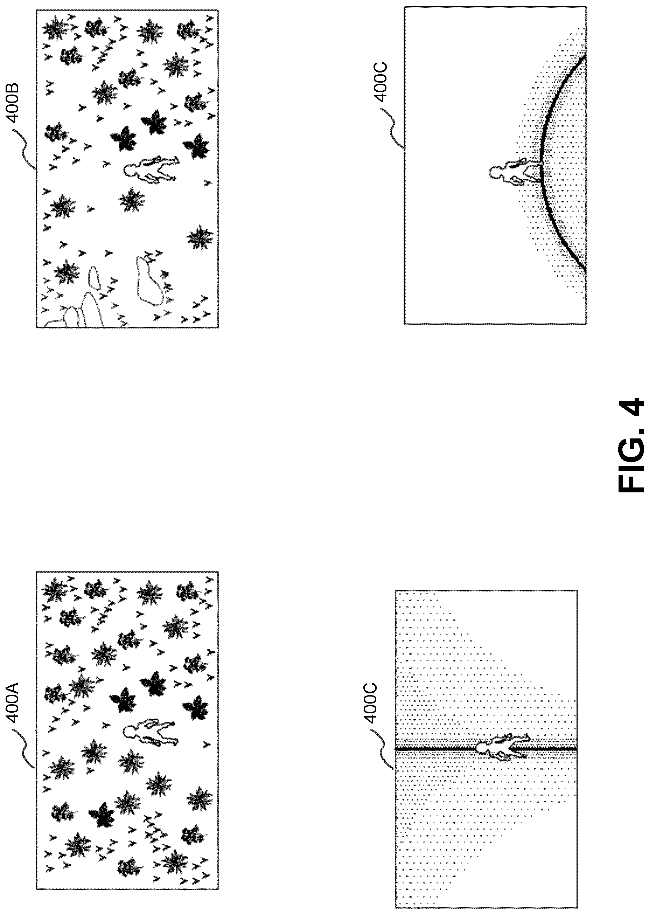

A video coding system (for example, a cloud gaming server or a device (e.g., a mobile device) with light detection and ranging (LiDAR) capabilities) may receive input video frames (e.g., texture frames) with correlated depth information (e.g., a depth map) and/or motion information (e.g., derived from a motion information auxiliary map). FIG. 4 illustrates an example texture frame 400A of a video game with a corresponding depth map 400B, horizontal motion data 400C, and vertical motion data 400D that may be extracted (e.g., directly) from a game (e.g., a game engine) rendering a game scene. The depth map 400B may be represented by a grey-level image indicating a distance between a camera and an actual object. The depth map 400B may represent a basic geometry (e.g., the basic geometry of a captured video scene). The depth map 400B may be associated with a texture picture of a video content and may include a dense monochrome picture of a resolution that may be similar to a luma picture (e.g., the same as a luma picture). The depth map 400B, the horizontal motion data 400C, and/or the vertical motion data 400D may have a resolution that may be similar to or different from a luma picture (e.g., the same as or different from a luma picture).

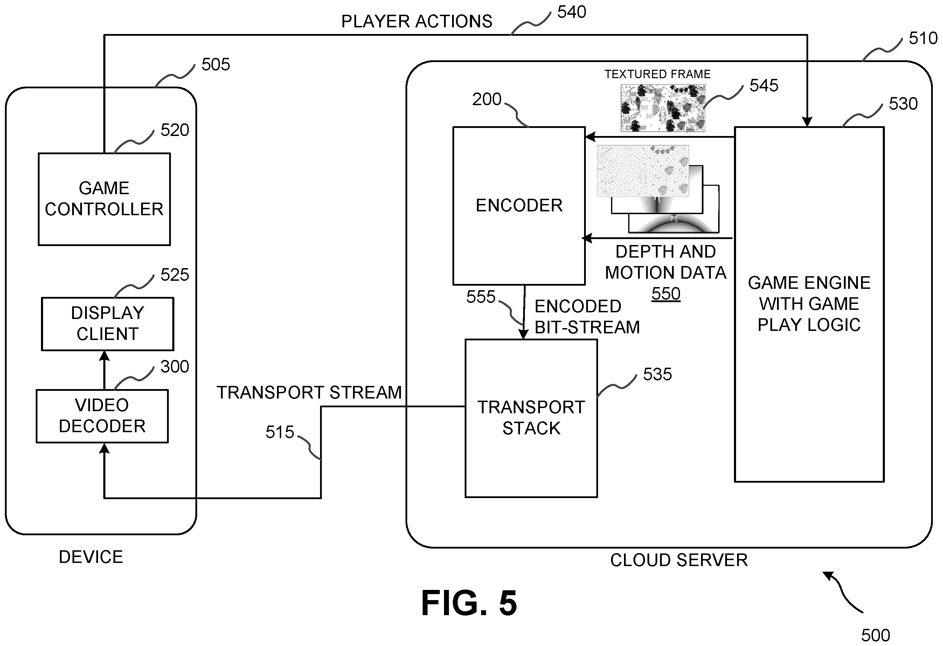

FIG. 5 shows an example architecture of a cloud gaming system 500 including a gaming device 505 and a cloud server 510. The cloud server 510 streams a video game play stream 515 to the gaming device 505. The gaming device 505 is, for example, a gaming console, a personal computer, a mobile device, or the like of a video game user. In the example illustrated, the gaming device 505 includes a game controller 520, a display client 525, and the video decoder 300. The game controller 520 is, for example, a joystick, a keyboard, and/or the like used to control actions to play the game. The actions include, for example, moving an avatar in a game, etc. The display client 525 displays the game play for the user. The video decoder 300 decodes the video gram play stream 515 from the cloud server 510 for display on the display client 525.

The cloud server 510 is, for example, the gaming server of a game application provider. The cloud server 510 includes a game engine 530, the encoder 200, and a transport stack 535. The game engine 530 receives player actions 540 from the game controller 520 and generates corresponding video frames 545 (e.g., renders a game scene) for transmission to the gaming device 505. The video frames 545 may include corresponding depth and motion data 550 (e.g., motion information). The game engine 530 provides the video frames 545 and corresponding depth and motion data 550 to the encoder 200 for encoding. The encoded video frames 555 (e.g., encoded bit-stream) is provided to the transport stack 535 for transmission to the gaming device 505. The transport stack 535 encapsulates the encoded video frames 545 in a transport protocol and sent as the video game play stream 515 to the gaming device 505. FIG. 5 illustrates only one example implementations of the video encoding techniques described herein. Other example implementations include streaming video captured using a camera with a depth sensor (e.g., LiDAR), etc.

As illustrated in FIG. 5, additional information such as a depth map, motion information, an object ID, an occlusion mask, camera parameters, etc., may be obtained from the game engine 530 (e.g., as outputs of the game engine 530) and made available to the encoder 200 as prior information.

The information described herein such as the depth or motion information or a combination of both may be utilized to speed up (e.g., help speed up) rate distortion optimization (R-DO) process on a video processing device (e.g., the encoder side of a video codec). The R-DO operations are simplified utilizing such information while still preserving coding gains (e.g., compression gains).

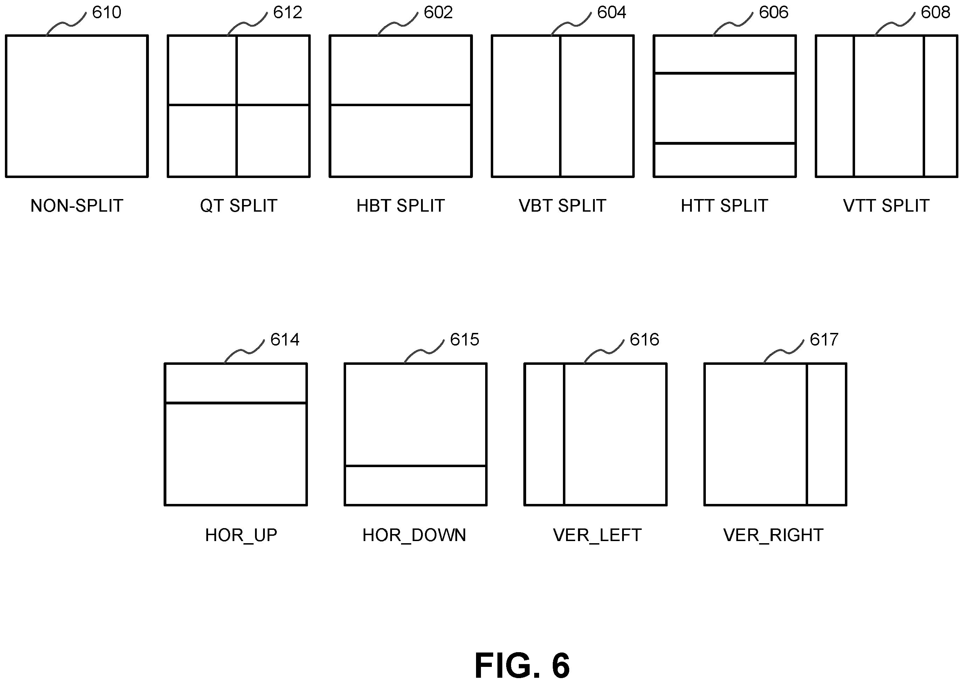

Video frames to be encoded (for example, by the encoder 200) are divided into a sequence of Coding Tree Units (CTUs). In VVC, for example, a CTU can be considered as a Coding Unit (CU) when it is not split or can be partitioned by a quaternary tree (QT) structure. The quadtree leaf nodes may be further recursively partitioned by a multi-type tree (MTT) structure. FIG. 6 shows example splitting types for intra and/or inter coded blocks. MTT partitioning may include one or more of a horizontal binary tree split (HBT) 602, a vertical binary tree split (VBT) 604, a horizontal ternary tree split (HTT) 606, or a vertical ternary tree split (VTT) 608. A block partitioning operation may be used where a coding tree unit (CTU) may be associated with (e.g., considered as) a single coding unit (CU), for example, when the CTU is not split 610, or when the CTU is recursively split (e.g., using a quaternary tree partitioning (QT) 612 first and then further recursively split using a multi-type tree partitioning (MTT)).Additional splitting types 614 - 617 (e.g., additional asymmetric binary tree (ABT) splitting modes) that may also be considered as part of an MTT structure.

The term "split," "split type," "splitting type," or "split mode" may be used interchangeably herein with the term "partition," "partitioning type," or "partitioning mode," respectively.

The encoder 200 may assess rate-distortion performance of each available coding tool for each possible splitting type per video frame. At the end of the R-DO process, the encoder 200 selects the splitting type and coding tool combination with the best rate-distortion performance to encode the video frame. The encoder 200 complexity therefore depends on the number of possible splitting types and the number of coding tools to be assessed for each possible partitioning.

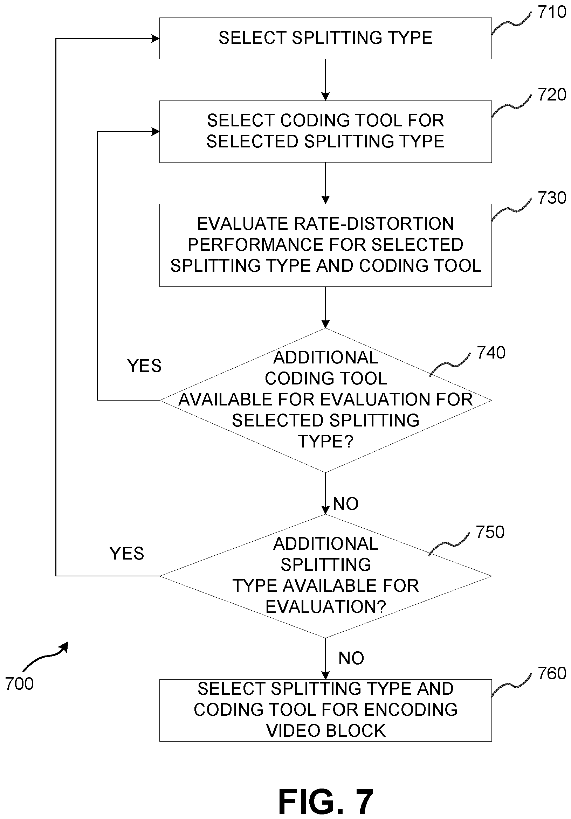

FIG. 7 illustrates a flowchart of an example method 700 for rate-distortion optimization. As an example, the method 700 is described herein as being performed by an encoder 200 (shown in FIG. 2). The method 700, in particular, is described herein in terms of an electronic processor (e.g., processor 110) of the encoder 200. In the example illustrated, the method 700 includes a first loop for coding tool rate-distortion performance evaluation embedded in a second loop for splitting type evaluation. The method 700 includes selecting a splitting type for evaluation (at block 710). The encoder 200 selects an initial splitting type from the plurality of possible splitting types for the video codec and system for rate-distortion performance evaluation. The method 700 also include selecting a coding tool for the selected splitting type (at block 720). The encoder 200 selects an initial coding tool from a list of coding tools applicable for the splitting type.

The method 700 includes evaluating the rate-distortion performance for the selected splitting type and coding tool (at block 730). The encoder 200 may evaluate the rate-distortion performance and store the result (e.g., score) of the evaluation in a memory corresponding to the selected splitting type and coding tool. The method 700 includes determining whether an additional coding tool is available for evaluation for the selected splitting type (at block 740). The encoder 200 may refer to the list of coding tools applicable for the splitting type to determine whether all of the coding tools are evaluated (i.e., R-DO) with respect to the splitting type. When an additional coding tool is available, the method 700 returns to block 720 to select the next coding tool for evaluation.

When an additional coding tool is not available, the method 700 includes determining whether an additional splitting type is available for evaluation (at block 750). The encoder 200 may continue to proceed to the next available splitting type until all splitting types are evaluated. When an additional splitting type is available for evaluation, the method 700 returns to block 720. When all splitting types are evaluated, the method 700 includes selecting a splitting type and coding tool for encoding the video block (at block 760). The encoder 200 may refer to the stored scores to select the best splitting type and coding tool for encoding the video frame. The encoder may select the splitting type and the coding tool having the lowest rate distortion.

While the example MTT partitioning or splitting modes described herein may provide increased coding gains (e.g., due to the added flexibility), the MTT partitioning or splitting modes may lead to increased coding complexity (e.g., on the encoder side) when using brute-force testing (e.g., method 700) of each coding tool (i.e., evaluating all available coding tools) for each split type (i.e., evaluating all available splitting types). To obtain compression gains, post VVC codecs may support increasingly more splitting modes, with increasingly more coding tools available. The encoder complexity is roughly proportional to the multiplication of the number of possible splitting types by the number of coding tools. The combination of more splitting modes and coding tools leads to a large increase in encoder complexity.

Additionally, cloud gaming applications may require very low latency to preserve the gaming experience. Encoding such contents in real time with low latency largely constrains the encoder complexity. Even if the implementation of all coding tools is mandatory at the decoder side (for example, to be compliant with a compression standard), real time encoder (and low latency encoder) manufacturers may have a maximum complexity budget. Manufacturers may struggle to assess the R-DO performance of all the available coding tools for each possible partitioning.

Some available solutions to decrease encoder complexity include determining the splitting types based on the depth map and/or motion information to reduce the number of splitting types to be evaluated for rate-distortion performance. Reducing number of splitting types for evaluation provides partial complexity gains over the brute-force method. Encoder complexity may be further reduced by reducing the number of coding tools for rate-distortion performance evaluation. In some examples, reducing number of coding tools can be performed independent of (e.g., without) reducing the number of splitting types.

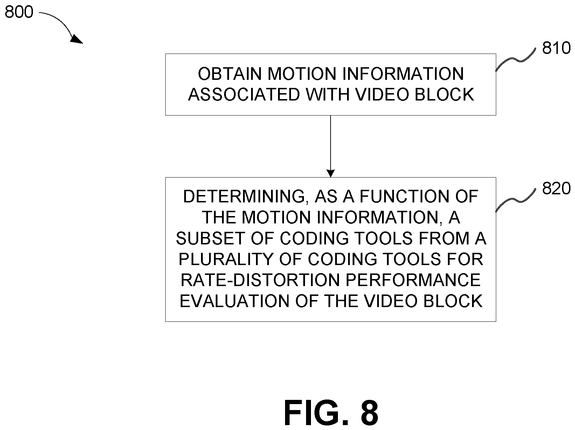

FIG. 8 is a flowchart of an example method 800 for video encoding according to some examples. As an example, the method 800 is described herein as being performed by an encoder 200 (shown in FIG. 2). The method 800, in particular, is described herein in terms of an electronic processor (e.g., processor 110) of the encoder 200. Rather than evaluating all the available coding tools for a given splitting as described above, motion information (provided, for example, as a motion information auxiliary map) can be used to reduce the number of coding tools for evaluation.

In the example illustrated, the method 800 includes obtaining motion information associated with a video block (at block 810). The encoder 200 may receive the motion information for each video block from the game engine 530. In other implementations, the encoder 200 may receive the motion information from other sources, e.g., a video camera with LiDAR, etc. The method 800 includes determining, as a function of the motion information, a subset of coding tools from a plurality of coding tools for rate-distortion performance evaluation of the video block (at block 820). As described in more detail below, in instances where the characteristics of the motion information associated with the current block do not meet a motion model of a particular coding tool, the rate-distortion performance need not be evaluated for the coding tool. The encoder 200 analyzes the motion information as described in the below examples to select a subset of coding tools for rate-distortion performance evaluation. Only the subset of coding tools may be provided in the list for each splitting type, for example, at block 740 of the method 700. Accordingly, only the subset of coding tools may be evaluated at block 730 of the method 700. In one example, the subset of coding tools may be placed in a list for evaluation for each splitting tool that is being evaluated. The encoder evaluates only the coding tools in the list for each splitting tool being evaluated. In another example, the subset of coding tools may be flagged such that the encoder 200 checks for a flag for each coding tool between blocks 740 and 730 such that only the flagged tools are evaluated at block 730.

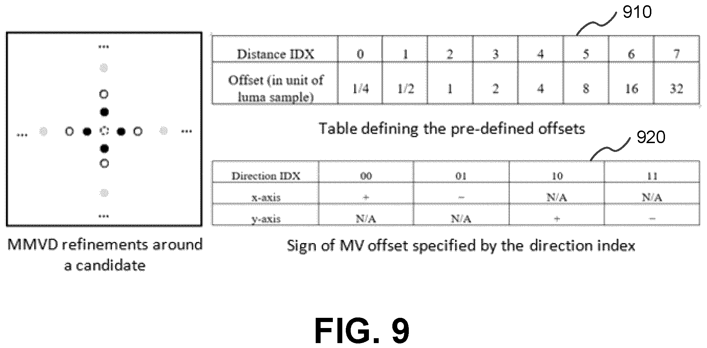

As explained in more detail below, different coding tools may be considered more suitable than others for different types of motion information. Various examples of different types of coding tools are explained below with respect to FIGS. 9-12.

Some coding tools (e.g., a regular merge coding tool) apply the same motion vector to the whole current CU, corresponding to a simple translation from the reference image/video block to the current block. A merge with motion vector difference (MMVD) coding tool applies offsets around motion vector candidates. During the rate-distortion optimization, for each candidate in the MMVD candidates list, the encoder 200 applies offsets defined in a table, in different directions. In VVC, the candidates list includes a list of 2 candidates.

FIG. 9 illustrates an example MMVD refinement and corresponding offset tables: direction offset table 910 and sign of motion vector (MV) offset table 920. During the R-DO evaluation, the encoder assesses the different offsets with the different directions around each candidate resulting in several combinations. When a candidate associated with an offset and a direction is selected by the encoder as the best way to encode the current block, the encoder signals that the MMVD tool be used. The encoder also signals the MMVD candidate (the index of the candidate in the list) and refinement information. In VVC, for example, this information includes an index specifying the motion vector magnitude (the offset represented by distance IDX), and an index indicating the motion direction (Direction IDX). In the example illustrated in FIG. 8, the smaller refinement around the candidates for Distance IDX = 0 is a quarter of pixel and can go up to 32 pixels.

As described above, regular merge and MMVD inter tools apply the same motion vector to the whole block, corresponding to a translation between the reference and the current image. The regular merge and the MMVD inter tools are given here as example of tools applying the same motion vector for the whole block, corresponding to a translation. As an example, and as described in more detail below, it may be not optimal to perform the R-DO evaluation of the regular merge or the MMVD tools when the motion information associated with the current video block shows large discontinuities. In such instances, the encoder may not select the regular merge and MMVD coding tools.

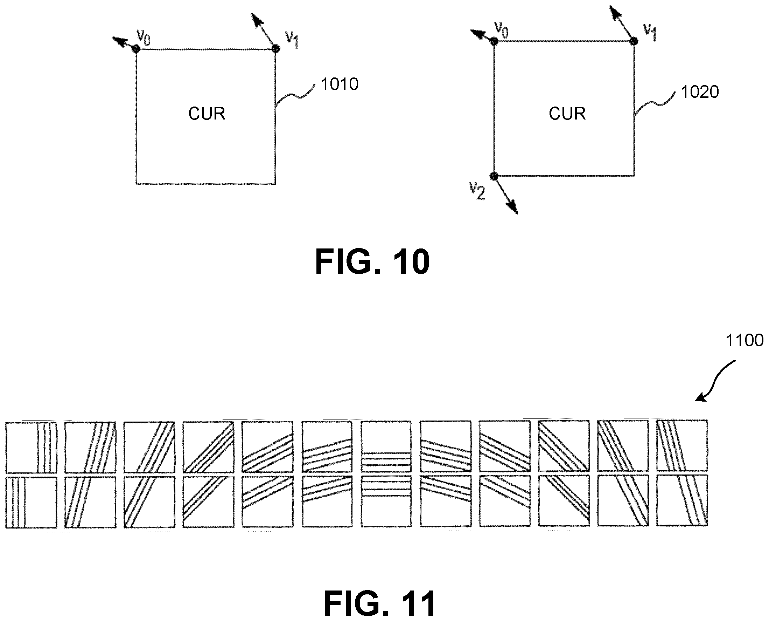

Other kinds of coding tools may be more efficient (and thus, selected by the encoder) for instances where the motion information indicates certain variable motion (for example, zoom in/out, rotation, perspective motions and other irregular motions). Another coding tool, for example, is a block-based affine transform motion compensation prediction (MCP). FIG. 10 shows a pair of motion models 1010 and 1020 each illustrating an example affine motion field of a video block. The model 1010 is an example affine motion field of the video block described by motion information of two control point (4-parameter) motion vectors. The model 1020 is an example affine motion field of the video block described by motion information of three control point (6-parameter) motion vectors.

For a 4-parameter affine motion model (for example, model 1010), a motion vector at sample location (*x*, *y*) in a block is derived as:

$$\begin{cases} mv_x = \frac{mv_{1x}-mv_{0x}}{W}x + \frac{mv_{1y}-mv_{0y}}{W}y + mv_{0x} \\ mv_y = \frac{mv_{1y}-mv_{0y}}{W}x + \frac{mv_{1y}-mv_{0x}}{W}y + mv_{0y} \end{cases}$$

For a 6-parameter affine motion model (for example, model 1020), a motion vector at sample location (*x*, *y*) in a block is derived as:

$$\begin{cases} mv_x = \frac{mv_{1x}-mv_{0x}}{W}x + \frac{mv_{2x}-mv_{0x}}{H}y + mv_{0x} \\ mv_y = \frac{mv_{1y}-mv_{0y}}{W}x + \frac{mv_{2y}-mv_{0y}}{H}y + mv_{0y} \end{cases}$$

Where ($mv_{0x}$, $mv_{0y}$) is motion vector of the top-left corner control point, ($mv_{1x}$, $mv_{1y}$) is motion vector of the top-right corner control point, and ($mv_{2x}$, $mv_{2y}$) is motion vector of the bottom-left corner control point.

For the example affine motion models 1010 and 1020 illustrated in FIG. 10, the motion information varies linearly from block's corner to corner.

Some coding tools may be selected in instances where the motion information indicates discontinuities. One such coding tool, for example, is a geometric partitioning mode (GPM or Geo). The geometric partitioning mode is signaled using a CU-level flag as one kind of merge mode. 64 partitions can be supported by geometric partitioning mode for each possible CU size $w \times h = 2^m \times 2^n$ with m,n $\in\{3\cdots6\}$ (excluding 8x64 and 64x8), where *w* is the width and *h* is the height of the CU.

When Geo mode is used, the CU is partitioned into two parts by a straight line. For example, FIG. 11 shows a plurality of different types of Geo partitioning of a block 1100. After predicting each of part of the geometric partition, the sample values along the geometric partition edge are adjusted using a blending processing with adaptive weights. For the particular geometric partitioning examples illustrated in FIG. 11, the MCP is performed with two different motion vectors.

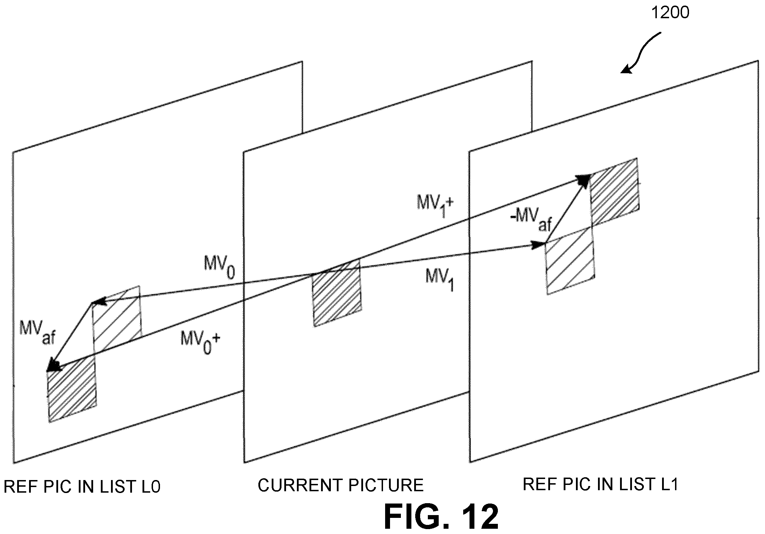

Some coding tools may consider the temporal aspect of a block's motion. For example, a bilateral-matching (BM) based decoder-side Motion Vector Refinement (DMVR) is applied in VVC that increases the accuracy of the motion vectors of the merge mode. With reference to FIG. 12, in bi-prediction operation, a refined motion vector is searched around the initial motion vectors in a reference picture list L0 and a reference picture list L1. The BM method calculates the distortion between the two candidate blocks in the reference picture list L0 and list L1. As illustrated in FIG. 11, the sum of absolute differences (SAD) between the blocks 1102A and 1102B based on each motion vector candidate around the initial motion vector is calculated. The motion vector candidate with the lowest SAD becomes the refined motion vector and used to generate the bi-predicted signal.

In DVMR, the search points are surrounding the initial motion vector and the motion vector offsets obey the motion vector difference mirroring rule. In other words, any points that are checked by DMVR, denoted by candidate motion vector pair (MV0, MV1) obey the following two equations:

$$MV0' = MV0 + MV\_offset$$

$$MV1' = MV1 - MV\_offset$$

Where *MV_offset* represents the refinement offset between the initial motion vector and the refined motion vector in one of the reference pictures. The refinement search range is two integer luma samples from the initial motion vector. The searching includes the integer sample offset search stage and fractional sample refinement stage.

As illustrated in FIG. 12, the symmetry around the current picture 1200 implies that the motion of the current block before and after the current picture 1200 is supposed to be continuous. Thus, when the distance between the reference picture in list L0 and the current picture 1200 (L0 picture order count (POC) distance) and the distance between the reference picture in list L1 and the current picture 1200 (L1 POC distance) are the same, $MV_0$ and $MV_1$ are symmetric. $MV_0$ should be almost equal to -$MV_1$.

DMVR refinement may also be applied when the L0 and the L1 POC distances are different. In this case, the relationship between $MV_0$ and $MV_1$ depends on the distances to the current image. For the DMVR tool given here as an example, the continuous motion around the current picture implies a relationship between $MV_0$ and $MV_1$.

In VVC, DMVR is not signaled but applied at the encoder and decoder sides when some conditions are met. Such tools may also be signaled to the decoder.

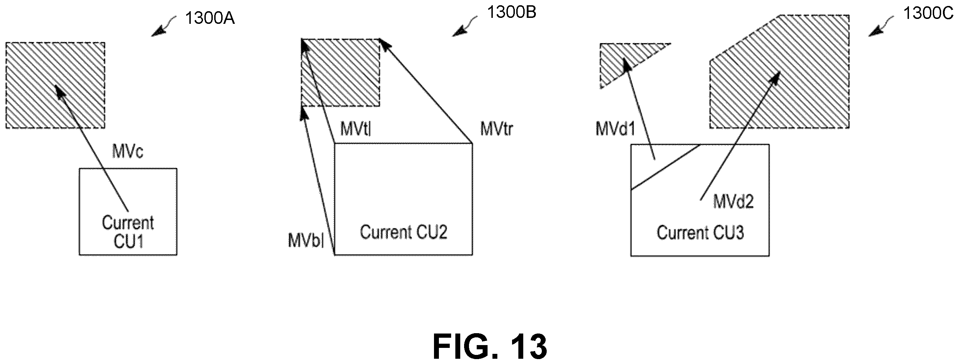

FIG. 13 illustrates examples of MCP 1300A-1300C that may be applied to a current CU, corresponding to one or more inter tools. Hashed areas represent areas in the reference images pointed by the motion vectors used for the motion compensation.

In the example 1300A, the motion compensation applied to the current block CU1 is performed with the same vector MVc for all pixels of the block. In this case, the per-pixel (or group of pixels) motion information of the current block CU1, provided as auxiliary map, is approximately constant. This case corresponds to the regular merge and MMVD examples of inter tools (described above with respect to FIG. 9).

In the evaluation of whether these kinds of tools should be evaluated or not during the RD-O, the motion information may be evaluated to determine whether it is (at least substantially) constant for the current block. The variance of the motion information may, for example, be used to verify the homogeneity of the motion information. In instances where the motion information is approximately constant for the current block, inter tools that apply constant motion vectors (for example, regular merge and MMVD) may be selected for evaluation.

In the example 1300B, the motion compensation applies an affine transformation to the reference to predict the current block CU2. The evolution of the motion information provided as auxiliary map for this bloc CU2 is linear from MVtl to MVtr, and from MVtl to MVbl. This case corresponds to the affine transform example of inter tools (described above with respect to FIG. 10).

Verifying a linear evolution of the motion information provided as an auxiliary map between MVbl, MVtl and MVtr may be used to decide when affine motion model tools should be evaluated or not during the RD-O.

In the example 1300C, the motion compensation uses two different motion vectors MVd1 and MVd2 to point to two different areas in the reference image. The motion information associated with the current block CU3 presents a discontinuity at the border between MVd1 and Mvd2. This case corresponds to the Geo example (described above with respect to FIG. 11).

Verifying that the motion information provided as an auxiliary map presents a discontinuity for the current block may be used to determine which tools are to be evaluated or not during the RD-O. Motion discontinuities may be determined, for example, by computing a gradient on the motion information and comparing the gradient with a threshold.

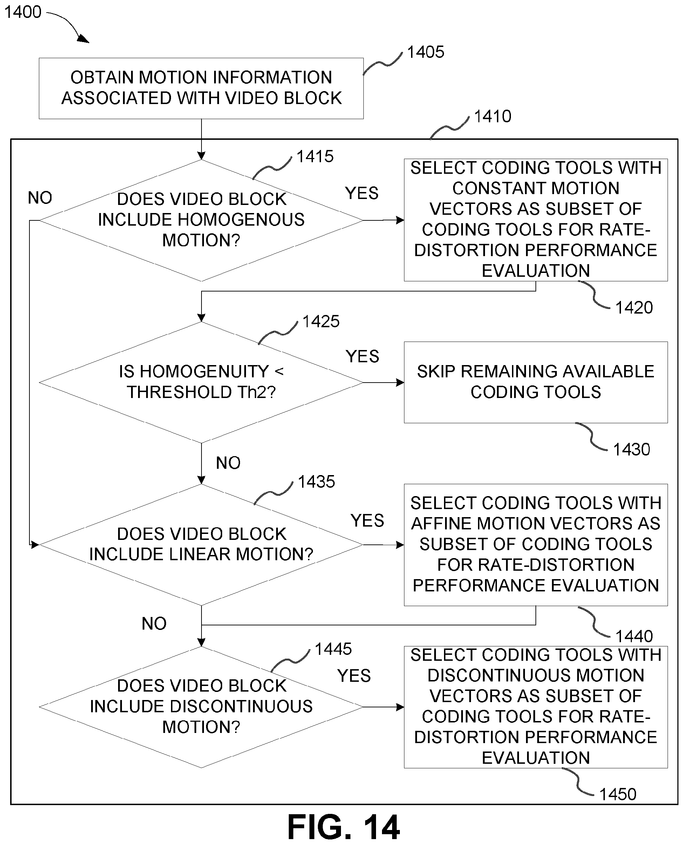

FIG. 14 illustrates a video encoding method 1400 according to one example. The method 1400 corresponds to determining which coding tools should be evaluated for RD-O performance at block 820 of method 800). Following obtaining the motion information associated with the video block (block 1405), a subset of coding tools from the plurality of coding tools for RDO performance evaluation is determined based on the motion information (block 1410). Block 1410 provides one example of implementing block 820 of method 800. Block 820 may be performed in other ways than illustrated in block 1410. In some embodiments, the motion information is a per-pixel (or group of pixels) motion information auxiliary map. In some embodiments, the motion information is provided per pixel or is sub-sampled, representing the motion information per group of pixels.

At block 1415, the method 1400 includes determining whether the video block includes homogeneous motion. The homogeneity of the motion information is evaluated for the current video block. For example, the variance of the motion information associated with the current block is computed. The variance is compared to a predetermined threshold Th1. When the variance is below the predetermined threshold Th1, the motion inside the current block is approximately homogeneous. In such instances, as described above with respect to example 1300A of FIG. 13, the current video block may be predicted using a single motion vector per reference frame, corresponding to a basic translation. In response to determining that the motion information includes homogeneous motion, the method 1400 includes selecting coding tools with constant motion vectors (for example, regular merge and MMVD) as the subset of coding tools for rate-distortion performance evaluation (at block 1420).

In some examples, the homogeneity of the motion information is optionally compared to a second predetermined threshold Th2 (block 1425). When the variance is below the second threshold Th2 (indicating a very homogeneous motion vector field), only coding tools performing the MCP with a single motion vector (i.e., those of block 1420) are evaluated for rate-distortion performance while the other remaining available coding tools that use several motion vectors or affine models are skipped (block 1430). Selecting a limited number of tools for evaluation as described above reduces the RD-O complexity of the encoder 200. When the variance is higher than the second predetermined threshold Th2, the method 1400 includes determining whether to select other coding tools for rate-distortion performance evaluation.

At block 1435, the method 700C includes determining whether the motion information includes linear motion. For example, the encoder 200 determines whether the motion information meets the 4 or 6 parameters equations of the affine model (as described above with respect to example 1300B of FIG. 13). When the motion information includes linear motion, at block 1440, the method includes selecting coding tools with affine motion vectors (for example, affine motion model coding tools) as the subset of coding tools for RD-O performance evaluation.

At block 1445, the method 1400 includes determining whether the motion information includes discontinuities (for example, as described above with respect to example 1300C of FIG. 13). The encoder 200 computes gradients on the motion. The encoder 200 compares the gradients to one or more gradient thresholds to detect motion information discontinuities. When a predetermined number of discontinuities are detected, the method 1400 includes selecting coding tools with discontinuous motion vectors (for example, the Geo tool) as the subset of coding tools for RD-O performance evaluation (block 1450).

In some embodiments, one or more predetermined thresholds may be used to evaluate the linearity and/or the discontinuity of the motion information, for example, to manage levels of confidence. With multiple different thresholds, the evaluation of the RD-O performance of several types of coding tools may be exclusive (for example, skipping the remaining available coding tools (block 1430) and selecting only one or selecting a plurality of coding tools for rate-distortion performance evaluation) when the confidence is high. When the confidence is lower, a plurality of coding tools may be evaluated (for example, to preserve the compression performance of the encoder). For example, when the motion information is almost linear, with, for example, short discontinuities, both types of inter tools (tools with constant motion vectors and tools with discontinued motion vectors) may be selected for RD-O performance evaluation (blocks 1420 and 1450).

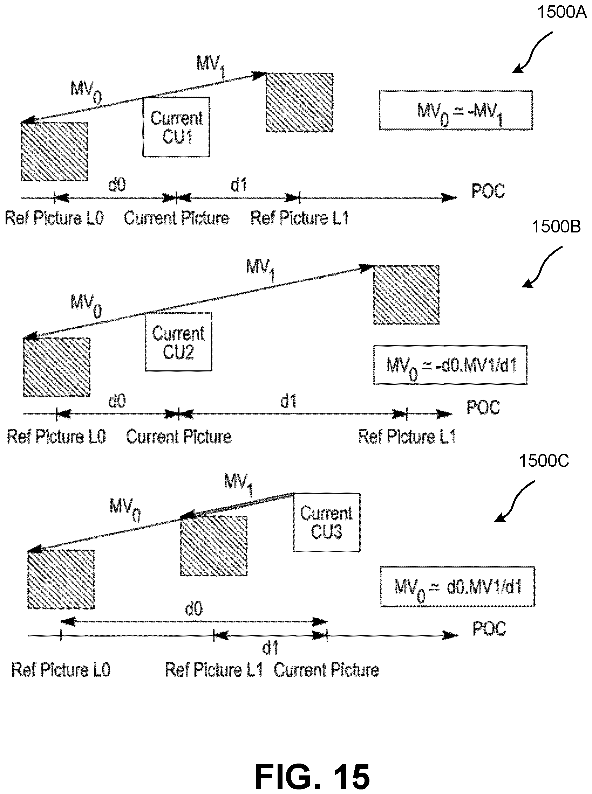

In some embodiments, the encoder 200 determines whether coding tools that utilize a temporal aspect of the motion information (for example, DMVR described above with respect to FIG. 12) should be evaluated for RD-O performance. FIG. 15 illustrates examples 1500A-1500C where coding tools that utilize temporal aspects (in particular, DMVR) may be selected for RD-O performance evaluation. The methods described below with respect to FIG. 15 may be applicable to video blocks coded with two reference pictures (for example, in Random Access (RA) Mode and Low Delay B (LDB) mode.

As previously described, DMVR is an example of coding tool that depends on the temporal aspect of the current block motion. With respect to example 1500A, the L0 POC distance d0 is substantially equal to the L1 POC distance d 1. When the motion of the current block is continuous, the L0 motion vector MV0 and the L1 motion vector MV1 are symmetric, MV0 should be substantially equal to -MV1.

When the motion information provided as auxiliary map meets the condition MV0 $\simeq$ - MV1 (i.e., MV0 is substantially equal to -MV1), the encoder 200 selects temporal based coding tools (e.g., DMVR) as part of the subset of coding tools for rate-distortion performance evaluation. For example, the DMVR coding tool is evaluated for rate-distortion performance when MV0 is in the range -MV1 $\pm$ $\Delta$, with $\Delta$ being a constant expressed in pixels and preset based on desired performance requirements.

For refinements in random access configurations as shown in example 1500B, the L0 POC distances d0 and the L1 POC distances d1 are not substantially equal.

When the motion information provided as auxiliary map meets the condition MV0 $\simeq$ - d0.MV1/d1, the encoder 200 selects temporal based coding tools (e.g., DMVR) as part of the subset of coding tools for rate-distortion performance evaluation. For example, the DMVR coding tool is evaluated for rate-distortion performance evaluation when MV0 is in the range -d0.MV1/d1 $\pm$ $\Delta$.

For refinements in LDB configurations as shown in example 1500C, the L0 POC distances d0 and the L1 POC distances d1 are not substantially equal.

When the motion information provided as auxiliary map meets the condition MV0 $\simeq$ d0.MV1/d1, the encoder selects temporal based coding tools (e.g., DMVR) as part of the subset of coding tools for rate-distortion performance evaluation. For example, the DMVR coding tool is evaluated for rate-distortion performance when MV0 is in the range d0.MV1/d1 $\pm$ $\Delta$.

Thus, in some embodiments, the encoder 200 is configured to analyze a temporal aspect of the motion, provided by the auxiliary motion information map. The relationship between the two motion vectors MV0 and MV1 can characterize a continuous motion. Thus, coding tools may be selected for RD-O performance evaluation when the motion information meets any of the above-noted relationships.

It should be noted that some image processing techniques such as gradient or variance computation, thresholds on them, etc. are proposed herein in accordance with some embodiments. In some embodiments, one or more Neural Network techniques may additionally or alternatively be used in some embodiments to select the coding tools before evaluation during the R-DO process.

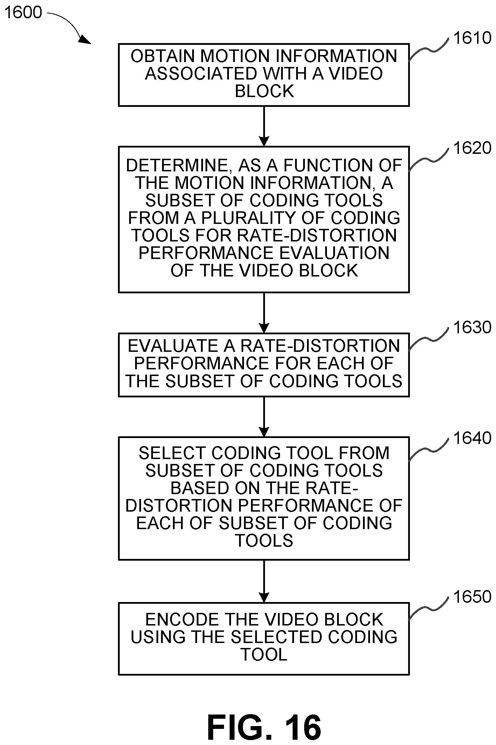

FIG. 16 is a flowchart illustrating a video encoding method 1600 according to some embodiments. As an example, the method 1600 is described herein as being performed by an encoder 200 (shown in FIG. 2). The method 1600, in particular, is described herein in terms of an electronic processor (e.g., processor 110) of the encoder 200.

At block 1610, the method 1600 includes obtaining motion information associated with a video block. The motion information includes, for example, per-pixel or group of pixels motion information of the video block. In one example, the motion information is received from a gaming engine (for example, the gaming engine 502 of FIG. 5).

At block 1620, the method 1600 includes determining, as a function of the motion information, a subset of coding tools from a plurality of coding tools for a rate-distortion performance evaluation of the video block.

As described above with respect to FIGS. 8 and 14, in some embodiments, determining the subset of coding tools includes selecting a coding tool applying a constant motion vector in response to motion information homogeneity (for example, block 1405 of method 1400). In some embodiments, the motion information homogeneity is determined, for example, based on a comparison of a variance of the motion information to one or more predetermined thresholds (for example, Th1).

In some embodiments, determining the subset of coding tools includes bypassing an evaluation of remaining coding tools of the plurality of the coding tools in response to the variance being below a second predetermined threshold (for example, Th2).

In some embodiments, determining the subset of coding tools includes selecting a coding tool applying an affine transformation in response to an evolution of the motion information of the video block being linear (for example, block 1435 of method 1400). In some embodiments, determining the subset of coding tools includes selecting a coding tool applying different motion vectors in response to a gradient of the motion information satisfying a gradient threshold (for example, block 1445 of FIG. 1400).

In some embodiments, determining the subset of coding tools includes selecting a coding tool that utilizes a temporal aspect of the video block. In such embodiments, the selection may include determining that the motion information indicates/includes continuous motion. Continuous motion may be determined, for example, based on a relationship between a first motion vector defined between a point of the current video block and a point of a first reference picture list and a second motion vector defined between the point of the current video block and a point of a second reference picture list. For example, as described above with respect to FIGS. 12 and 15, in some embodiments, the coding tool may be a DMVR tool.

As described above, in some embodiments, more than one type of coding tools may be selected for the RD-O performance evaluation and, thus, included in the subset. Alternatively, in some embodiments, the subset of coding tools may consist of coding tools of the same type.

The method 1600 further includes evaluating a rate-distortion performance for each of the subset of coding tools (block 1630) and, at block 1640, selecting a coding tool from the subset of coding tools based on the rate-distortion performance of each of the subset of coding tools. At block 1650, the method 1600 includes encoding the video block using the selected coding tool and the splitting type.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Example 1. A video encoding device comprising: an electronic processor configured to: obtain motion information associated with a video block; and determine, as a function of the motion information, a subset of coding tools from a plurality of coding tools for rate-distortion performance evaluation of the video block.

Example 2. The video encoding device of Example 1, wherein the motion information includes per-pixel or group of pixels motion information of the video block.

Example 3. The video encoding device of any of the preceding Examples, wherein the motion information is derived from a motion information auxiliary map.

Example 4. The video encoding device of any of the preceding Examples, wherein the electronic processor is configured to receive the motion information from a game engine.

Example 5. The video encoding device of any of the preceding Examples, wherein determining the subset of coding tools includes selecting a coding tool from the plurality of coding tools based on performing a comparison of a first characteristic of the motion information to a first predetermined threshold.

Example 6. The video encoding device of Example 5, wherein determining the subset of coding tools further includes bypassing an evaluation of one or more of the plurality of encoding tools based on performing a comparison of the first characteristic of the motion information to a second predetermined threshold.

Example 7. The video encoding device of any of the preceding Examples, wherein determining the subset of coding tools includes selecting a coding tool applying a constant motion vector in response to motion information homogeneity.

Example 8. The video encoding device of Example 7, wherein the motion information homogeneity is determined based on a comparison of a variance of the motion information to a first predetermined variance threshold.

Example 9. The video encoding device of Example 8, wherein determining the subset of coding tools includes bypassing an evaluation of remaining coding tools of the plurality of the coding tools in response to the variance being below a second predetermined variance threshold.

Example 10. The video encoding device of any of the preceding Examples, wherein determining the subset of coding tools includes selecting a coding tool applying an affine transformation in response to evolution of the motion information of the video block being linear.

Example 11. The video encoding device of any of the preceding Examples, wherein determining the subset of coding tools includes selecting a coding tool that utilizes a temporal aspect of the motion information of the video block in response to a relationship between two motion vectors relating to the video block and two reference blocks satisfying a continuous motion condition.

Example 12. The video encoding device of Example 11, wherein the coding tool is a Decoder side Motion Vector Refinement (DMVR) tool.

Example 13. The video encoding device of any of the preceding Examples, wherein determining the subset of coding tools includes selecting a coding tool with motion discontinuities in response to a gradient of the motion information satisfying a gradient threshold.

Example 14. The video encoding device of any of the preceding Examples, wherein the electronic processor is further configured to evaluate rate-distortion performance for each of the subset of coding tools, select a coding tool from the subset of coding tools based on the rate-distortion performance of each of the subset of coding tools, and encode the video block using the selected coding tool.

Example 15. A video encoding method comprising: obtaining motion information associated with a video block; and determining, as a function of the motion information, a subset of coding tools from a plurality of coding tools for a rate-distortion performance evaluation of the video block.

Example 16. The video encoding method of Example 15, wherein the motion information includes per-pixel or group of pixels motion information of the video block.

Example 17. The video encoding method of any of the Examples 15-16, wherein the motion information includes a motion information auxiliary map.

Example 18. The video encoding method of any of the Examples 15-17, further comprising receiving the motion information from a gaming engine.

Example 19. The video encoding method of any of the Examples 15-18, wherein determining the subset of coding tools includes selecting a coding tool from the plurality of coding tools based on performing a comparison of a first characteristic of the motion information to a first predetermined threshold.

Example 20. The video encoding method of Example 19, wherein determining the subset of coding tools further includes bypassing an evaluation of one or more of the plurality of encoding tools based on performing a comparison of the first characteristic of the motion information to a second predetermined threshold.

Example 21. The video encoding method of any of the Examples 15-20, wherein determining the subset of coding tools includes selecting a coding tool applying a constant motion vector in response to motion information homogeneity.

Example 22. The video encoding method of Example 21, wherein the motion information homogeneity is determined based on a comparison of a variance of the motion information to a first predetermined variance threshold.

Example 23. The video encoding method of Example 22, wherein determining the subset of coding tools includes bypassing an evaluation of remaining coding tools of the plurality of the coding tools in response to the variance being below a second predetermined variance threshold.

Example 24. The video encoding method of any of the Examples 15-23, wherein determining the subset of coding tools includes selecting a coding tool applying an affine transformation in response to an evolution of the motion information of the video block being linear.

Example 25. The video encoding method of any of the Examples 15-24, wherein determining the subset of coding tools includes selecting a coding tool with motion discontinuities in response to a gradient of the motion information satisfying a gradient threshold.

Example 26. The video encoding method of any of the Examples 15-25, wherein determining the subset of coding tools includes selecting a coding tool that utilizes a temporal aspect of the motion information of the video block in response to a relationship between two motion vectors relating to the video block and two reference blocks satisfying a continuous motion condition.

Example 27. The video encoding method of Example 26, wherein the coding tool is a decoder side Motion Vector Refinement (DMVR) tool.

Example 28. The video encoding method of any of the Examples 15-27, further comprising evaluating rate-distortion performance for each of the subset of coding tools, selecting a coding tool from the subset of coding tools based on the rate-distortion performance of each of the subset of coding tools, and encoding the video block using the selected coding tool.

Example 29. A non-transitory computer readable medium storing instructions that, when executed by at least one electronic processor, perform a set of functions, the set of functions comprising: obtaining motion information associated with a video block; and determining, as a function of the motion information, a subset of coding tools from a plurality of coding tools for a rate-distortion performance evaluation of the video block.

Example 30. The non-transitory computer readable medium of Example 29, wherein the motion information includes per-pixel or group of pixels motion information of the video block.

Example 31. The non-transitory computer readable medium of any of the Examples 29-30, wherein the motion information includes a motion information auxiliary map.

Example 32. The non-transitory computer readable medium of any of the Examples 29-31, wherein the set of functions further comprises receiving the motion information from a gaming engine.

Example 33. The non-transitory computer readable medium of any of the Examples 29-32, wherein determining the subset of coding tools includes selecting a coding tool from the plurality of coding tools based on performing a comparison of a first characteristic of the motion information to a first predetermined threshold.

Example 34. The video encoding method of Example 33, wherein determining the subset of coding tools further includes bypassing an evaluation of one or more of the plurality of encoding tools based on performing a comparison of the first characteristic of the motion information to a second predetermined threshold.

Example 35. The non-transitory computer readable medium of any of the Examples 29-34, wherein determining the subset of coding tools includes selecting a coding tool applying a constant motion vector in response to motion information homogeneity.

Example 36. The non-transitory computer readable medium of any of the Examples 35, wherein the motion information homogeneity is determined based on a comparison of a variance of the motion information to a first predetermined variance threshold.

Example 37. The non-transitory computer readable medium of Example 36, wherein determining the subset of coding tools includes bypassing an evaluation of remaining coding tools of the plurality of the coding tools when the variance is below a second predetermined variance threshold.

Example 38. The non-transitory computer readable medium of any of the Examples 29-37, wherein determining the subset of coding tools includes selecting a coding tool applying an affine transformation in response to evolution of the motion information of the video block being linear.

Example 39. The non-transitory computer readable medium of any of the Examples 29-38, wherein determining the subset of coding tools includes selecting a coding tool with motion discontinuities in response to a gradient of the motion information satisfying a gradient threshold.

Example 40. The non-transitory computer readable medium of any of the Examples 29-39, wherein determining the subset of coding tools includes selecting a coding tool that utilizes a temporal aspect of the motion information of the video block in response to a relationship between two motion vectors relating to the video block and two reference blocks satisfying a continuous motion condition.

Example 41. The non-transitory computer readable medium of Example 40, wherein the coding tool is a decoder side Motion Vector Refinement (DMVR) tool.

Example 42. The non-transitory computer readable medium of any of the Examples 29-41, wherein the set of functions further comprises evaluating rate-distortion performance for each of the subset of coding tools, selecting a coding tool from the subset of coding tools based on the rate-distortion performance of each of the subset of coding tools, and encoding the video block using the selected coding tool.

Various methods and aspects described herein can be used to modify one or more modules. For example, the intra predictors and inter predictors described with respect to FIGS. 2 and 3 may be implemented as one or more modules and modified according to the various embodiments of the present disclosure.

The various embodiments described herein provide at least the following features, devices or aspects, alone or on any combination, across various claim categories and types:

  i. Encoding, into coded video data, syntax elements that can enable the decoder to decode the coded video data, according to any of the embodiments described herein.

  ii. A bitstream that includes one or more of the described syntax elements, or variations thereof, whether transmitted, stored, or otherwise made available.

  iii. Creating, transmitting, receiving, and/or decoding of the bitstream.

  iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," "video frame," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

    i. session description protocol (SDP), for example as described in RFCs and/or used in conjunction with real-time transport protocol (RTP) transmission.

    ii. hypertext transfer protocol (HTTP) live Streaming (HLS) manifest transmitted over HTTP.

    iii. dynamic adaptive streaming over HTTP (DASH) media presentation description (MPD) descriptors, for example as used in DASH and transmitted over HTTP.

    iv. RTP header extensions, for example as used during RTP streaming.

    v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A video encoding device comprising:
   an electronic processor configured to:

   obtain motion information associated with a video block; and
   determine, as a function of the motion information, a subset of coding tools from a plurality of coding tools for rate-distortion performance evaluation of the video block.

2. The video encoding device of claim 1, wherein determining the subset of coding tools includes selecting a coding tool from the plurality of coding tools based on performing a comparison of a first characteristic of the motion information to a first predetermined threshold,
   wherein determining the subset of coding tools further includes bypassing an evaluation of one or more of the plurality of encoding tools based on performing a comparison of the first characteristic of the motion information to a second predetermined threshold.

3. The video encoding device of any of the preceding claims, wherein determining the subset of coding tools includes selecting a coding tool applying a constant motion vector in response to motion information homogeneity, wherein the motion information homogeneity is determined based on a comparison of a variance of the motion information to a first predetermined variance threshold, and
   wherein determining the subset of coding tools includes bypassing an evaluation of remaining coding tools of the plurality of the coding tools in response to the variance being below a second predetermined variance threshold.

4. The video encoding device of any of the preceding claims, wherein determining the subset of coding tools includes selecting a coding tool applying an affine transformation in response to evolution of the motion information of the video block being linear.

5. The video encoding device of any of the preceding claims, wherein determining the subset of coding tools includes selecting a coding tool that utilizes a temporal aspect of the motion information of the video block in response to a relationship between two motion vectors relating to the video block and two reference blocks satisfying a continuous motion condition.

6. The video encoding device of any of the preceding claims, wherein determining the subset of coding tools includes selecting a coding tool with motion discontinuities in response to a gradient of the motion information satisfying a gradient threshold.

7. The video encoding device of any of the preceding claims, wherein the electronic processor is further configured to

   evaluate rate-distortion performance for each of the subset of coding tools,
   select a coding tool from the subset of coding tools based on the rate-distortion performance of each of the subset of coding tools, and
   encode the video block using the selected coding tool.

8. A video encoding method comprising:

   obtaining motion information associated with a video block; and
   determining, as a function of the motion information, a subset of coding tools from a plurality of coding tools for a rate-distortion performance evaluation of the video block.

9. The video encoding method of claim 8, wherein determining the subset of coding tools includes selecting a coding tool from the plurality of coding tools based on performing a comparison of a first characteristic of the motion information to a first predetermined threshold,
   wherein determining the subset of coding tools further includes bypassing an evaluation of one or more of the plurality of encoding tools based on performing a comparison of the first characteristic of the motion information to a second predetermined threshold.

10. The video encoding method of any of the claims 8-9, wherein determining the subset of coding tools includes selecting a coding tool applying a constant motion vector in response to motion information homogeneity, wherein the motion information homogeneity is determined based on a comparison of a variance of the motion information to a first predetermined variance threshold, and

wherein determining the subset of coding tools includes bypassing an evaluation of remaining coding tools of the plurality of the coding tools in response to the variance being below a second predetermined variance threshold.

11. The video encoding method of any of the claims 8-10, wherein determining the subset of coding tools includes selecting a coding tool applying an affine transformation in response to an evolution of the motion information of the video block being linear.

12. The video encoding method of any of the claims 8-11, wherein determining the subset of coding tools includes selecting a coding tool with motion discontinuities in response to a gradient of the motion information satisfying a gradient threshold.

13. The video encoding method of any of the claims 8-12, wherein determining the subset of coding tools includes selecting a coding tool that utilizes a temporal aspect of the motion information of the video block in response to a relationship between two motion vectors relating to the video block and two reference blocks satisfying a continuous motion condition.

14. The video encoding method of any of the claims 8-13, further comprising evaluating rate-distortion performance for each of the subset of coding tools,

selecting a coding tool from the subset of coding tools based on the rate-distortion performance of each of the subset of coding tools, and encoding the video block using the selected coding tool.

15. A non-transitory computer readable medium storing instructions that, when executed by at least one electronic processor, perform the method of any of claims 8-14.

**FIG. 1**

FIG. 2

**FIG. 3**

EP 4 723 623 A1

**FIG. 4**

EP 4 723 623 A1

FIG. 5

EP 4 723 623 A1

610

612

602

604

606

608

NON-SPLIT   QT SPLIT   HBT SPLIT   VBT SPLIT   HTT SPLIT   VTT SPLIT

614

615

616

617

HOR_UP   HOR_DOWN   VER_LEFT   VER_RIGHT

**FIG. 6**

EP 4 723 623 A1

```
┌─────────────────────────────────┐
│      SELECT SPLITTING TYPE       │ ⌇ 710
└─────────────────────────────────┘
                │
                ▼
┌─────────────────────────────────┐
│      SELECT CODING TOOL FOR      │ ⌇ 720
│      SELECTED SPLITTING TYPE     │
└─────────────────────────────────┘
                │
                ▼
┌─────────────────────────────────┐
│    EVALUATE RATE-DISTORTION      │ ⌇ 730
│  PERFORMANCE FOR SELECTED        │
│  SPLITTING TYPE AND CODING TOOL  │
└─────────────────────────────────┘
                │
                ▼
              ADDITIONAL
              CODING TOOL              ⌇ 740
  YES   AVAILABLE FOR EVALUATION FOR
              SELECTED SPLITTING
                  TYPE?
                │ NO
                ▼
              ADDITIONAL
              SPLITTING                ⌇ 750
  YES      TYPE AVAILABLE FOR
              EVALUATION?
                │ NO
                ▼
┌─────────────────────────────────┐
│  SELECT SPLITTING TYPE AND       │ ⌇ 760
│  CODING TOOL FOR ENCODING        │
│        VIDEO BLOCK               │
└─────────────────────────────────┘
```

700

# FIG. 7

800

OBTAIN MOTION INFORMATION
ASSOCIATED WITH VIDEO BLOCK — 810

DETERMINING, AS A FUNCTION OF
THE MOTION INFORMATION, A
SUBSET OF CODING TOOLS FROM A
PLURALITY OF CODING TOOLS FOR
RATE-DISTORTION PERFORMANCE
EVALUATION OF THE VIDEO BLOCK — 820

# FIG. 8

910

| Distance IDX | 0 | 1 | 2 | 3 | 4 | 5 | 6 | 7 |
|---|---|---|---|---|---|---|---|---|
| Offset (in unit of luma sample) | 1/4 | 1/2 | 1 | 2 | 4 | 8 | 16 | 32 |

Table defining the pre-defined offsets

920

| Direction IDX | 00 | 01 | 10 | 11 |
|---|---|---|---|---|
| x-axis | + | – | N/A | N/A |
| y-axis | N/A | N/A | + | – |

MMVD refinements around a candidate

Sign of MV offset specified by the direction index

# FIG. 9

**FIG. 10**

**FIG. 11**

REF PIC IN LIST L0        CURRENT PICTURE        REF PIC IN LIST L1

**FIG. 12**

FIG. 13

1400

OBTAIN MOTION INFORMATION
ASSOCIATED WITH VIDEO BLOCK  / 1405

/ 1410

DOES VIDEO BLOCK
INCLUDE HOMOGENOUS
MOTION?  / 1415

YES → SELECT CODING TOOLS WITH
CONSTANT MOTION
VECTORS AS SUBSET OF
CODING TOOLS FOR RATE-
DISTORTION PERFORMANCE
EVALUATION

1420

NO

IS HOMOGENUITY <
THRESHOLD Th2?  / 1425

YES → SKIP REMAINING AVAILABLE
CODING TOOLS

1430

NO

DOES VIDEO BLOCK
INCLUDE LINEAR MOTION?  / 1435

YES → SELECT CODING TOOLS WITH
AFFINE MOTION VECTORS AS
SUBSET OF CODING TOOLS
FOR RATE-DISTORTION
PERFORMANCE EVALUATION

1440

NO

DOES VIDEO BLOCK
INCLUDE DISCONTINUOUS
MOTION?  / 1445

YES → SELECT CODING TOOLS WITH
DISCONTINUOUS MOTION
VECTORS AS SUBSET OF
CODING TOOLS FOR RATE-
DISTORTION PERFORMANCE
EVALUATION

1450

## FIG. 14

1500A

$MV_0 \simeq -MV_1$

MV_1

MV_0

Current
CU1

d0          d1                          POC

Ref Picture L0    Current Picture    Ref Picture L1

1500B

MV_1

MV_0

Current
CU2

$MV_0 \simeq -d0.MV1/d1$

d0                    d1                POC

Ref Picture L0    Current Picture              Ref Picture L1

1500C

MV_1

MV_0

Current
CU3

$MV_0 \simeq d0.MV1/d1$

d0

d1                POC

Ref Picture L0        Ref Picture L1  Current Picture

# FIG. 15

1600

1610

OBTAIN MOTION INFORMATION
ASSOCIATED WITH A VIDEO
BLOCK

1620

DETERMINE, AS A FUNCTION OF
THE MOTION INFORMATION, A
SUBSET OF CODING TOOLS
FROM A PLURALITY OF CODING
TOOLS FOR RATE-DISTORTION
PERFORMANCE EVALUATION
OF THE VIDEO BLOCK

1630

EVALUATE A RATE-DISTORTION
PERFORMANCE FOR EACH OF
THE SUBSET OF CODING TOOLS

1640

SELECT CODING TOOL FROM
SUBSET OF CODING TOOLS
BASED ON THE RATE-
DISTORTION PERFORMANCE OF
EACH OF SUBSET OF CODING
TOOLS

1650

ENCODE THE VIDEO BLOCK
USING THE SELECTED CODING
TOOL

# FIG. 16

Europäisches
Patentamt

European
Patent Office

Office européen
des brevets

# EUROPEAN SEARCH REPORT

Application Number

**EP 24 30 6619**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 137 982 B1 (THOMSON LICENSING [FR]) 1 June 2016 (2016-06-01) * claim 6 * * paragraphs [0005], [0036], [0054], [0067], [0068], [0099], [0110], [0111] * | 1-15 | INV. H04N19/109 H04N19/139 H04N19/176 H04N19/61 |
| X | LIU YAO ET AL: "Enhancing Video Encoding for Cloud Gaming Using Rendering Information", IEEE TRANSACTIONS ON CIRCUITS AND SYSTEMS FOR VIDEO TECHNOLOGY, IEEE, USA, vol. 25, no. 12, 1 December 2015 (2015-12-01), pages 1960-1974, XP011593985, ISSN: 1051-8215, DOI: 10.1109/TCSVT.2015.2450175 [retrieved on 2015-12-02] * Sec IV; figure 1; table 2 * | 1-15 | |
| A | US 11 317 111 B2 (QUALCOMM INC [US]) 26 April 2022 (2022-04-26) * column 27, line 56 - column 28, line 26; figure 8 * | 4,11 | TECHNICAL FIELDS SEARCHED (IPC) H04N |
| A | WO 2020/061082 A1 (VID SCALE INC [US]) 26 March 2020 (2020-03-26) * paragraph [0123] * | 5,13 | |

The present search report has been drawn up for all claims

| Place of search | Date of completion of the search | Examiner |
|---|---|---|
| The Hague | 12 March 2025 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6619

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2025

| Patent document cited in search report | | | Publication date | Patent family member(s) | | Publication date |
|---|---|---|---|---|---|---|
| EP 2137982 | B1 | | 01-06-2016 | CN | 101731012 A | 09-06-2010 |
| | | | | CN | 103501440 A | 08-01-2014 |
| | | | | EP | 2137982 A2 | 30-12-2009 |
| | | | | JP | 5519055 B2 | 11-06-2014 |
| | | | | JP | 5797634 B2 | 21-10-2015 |
| | | | | JP | 5797635 B2 | 21-10-2015 |
| | | | | JP | 2010524396 A | 15-07-2010 |
| | | | | JP | 2013055689 A | 21-03-2013 |
| | | | | JP | 2013055690 A | 21-03-2013 |
| | | | | JP | 2013158046 A | 15-08-2013 |
| | | | | JP | 2015146635 A | 13-08-2015 |
| | | | | KR | 20100015462 A | 12-02-2010 |
| | | | | KR | 20140119803 A | 10-10-2014 |
| | | | | US | 2010118959 A1 | 13-05-2010 |
| | | | | WO | 2008127568 A2 | 23-10-2008 |
| US 11317111 | B2 | | 26-04-2022 | AU | 2020353234 A1 | 17-03-2022 |
| | | | | CN | 114402617 A | 26-04-2022 |
| | | | | EP | 4035395 A1 | 03-08-2022 |
| | | | | JP | 2022548990 A | 22-11-2022 |
| | | | | KR | 20220064970 A | 19-05-2022 |
| | | | | US | 2021099729 A1 | 01-04-2021 |
| | | | | WO | 2021062401 A1 | 01-04-2021 |
| WO 2020061082 | A1 | | 26-03-2020 | CN | 112715030 A | 27-04-2021 |
| | | | | CN | 118474345 A | 09-08-2024 |
| | | | | EP | 3854089 A1 | 28-07-2021 |
| | | | | IL | 281581 A | 31-05-2021 |
| | | | | JP | 7311589 B2 | 19-07-2023 |
| | | | | JP | 7553659 B2 | 18-09-2024 |
| | | | | JP | 2022501906 A | 06-01-2022 |
| | | | | JP | 2023118924 A | 25-08-2023 |
| | | | | JP | 2024166257 A | 28-11-2024 |
| | | | | KR | 20210071958 A | 16-06-2021 |
| | | | | KR | 20240142584 A | 30-09-2024 |
| | | | | TW | 202025751 A | 01-07-2020 |
| | | | | TW | 202402055 A | 01-01-2024 |
| | | | | US | 2022038679 A1 | 03-02-2022 |
| | | | | US | 2023050213 A1 | 16-02-2023 |
| | | | | US | 2023053233 A1 | 16-02-2023 |
| | | | | US | 2024205389 A1 | 20-06-2024 |
| | | | | WO | 2020061082 A1 | 26-03-2020 |

EPO FORM P0459

For more details about this annex : see Official Journal of the European Patent Office, No. 12/82